# EUROPÄISCHE PATENTANMELDUNG

(11) **EP 1 627 721 A2**
(43) Veröffentlichungstag der Anmeldung: **22.02.2006**
(21) Anmeldenummer: 05017559.5
(22) Anmeldetag: 12.08.2005
(51) Int. Cl.: B29C 45/14, B65D 35/10, B65D 35/14, B65D 35/44

(54) **Behälter aus Kunststoff sowie Verfahren zur Herstellung eines solchen Behälters**

(30) Priorität: 20.08.2004 DE 102004040673
(71) Anmelder: SysTec Komplettsysteme GmbH, 72574 Bad Urach (DE)
(72) Erfinder: Schreurs, Werner, 71332 Waiblingen (DE); Döbler, Walter, 72574 Bad Urach-Seeburg (DE)
(74) Vertreter: Jackisch-Kohl, Anna-Katharina

(57) **Zusammenfassung**

Der Behälter besteht aus Kunststoff und hat einen Kopf (9 bis 12), der an einen Grundkörper (7) angespritzt ist. Er weist eine Außenfolie (14) auf, die beim Spritzgießen des Behälters an ihrer Innenseite vollständig mit dem Kunststoff hinterspritzt ist. Bei einer anderen Ausbildung besteht der Grundkörper (7) ausschließlich aus der Folie (14). Zur Herstellung des Behälters wird die Folie (14) in gewickelter Form in ein Spritzgußwerkzeug eingelegt und an ihrer Innenseite vollständig mit dem Kunststoff hinterspritzt.

## Beschreibung

Die Erfindung betrifft einen Behälter aus Kunststoff nach dem Oberbegriff des Anspruches 1 sowie ein Verfahren zur Herstellung eines solchen Behälters nach dem Oberbegriff des Anspruches 16.

Es sind durch Spritzgießen hergestellte Behälter bekannt, deren Grundkörper über die Länge unterschiedlichen Querschnitt hat. So können die Grundkörper beispielsweise eine konische oder auch bauchige Form haben. Auf den Mantel dieses Grundkörpers wird eine Folie aufgeklebt, die infolge dieser Formgestaltung zugeschnitten werden muß. Solche Behälter lassen sich nur aufwendig und dementsprechend kostspielig herstellen. Außerdem entsteht wegen des Zuschnittes ein erheblicher Abfall an Folie.

Es sind Behälter aus Kunststoff mit einem Grundkörper bekannt (EP 1 162 154 A1), der aus einem Folienverbund mit einer inneren und einer äußeren Folie besteht, die jeweils mit einer Deckschicht versehen sind. Die verschiedenen Schichten können noch weitere Schichten enthalten, zum Beispiel Verstärkungsfolien, die dafür sorgen, daß eine Barrierewirkung gegen den Durchtritt oder Diffusion von Gas oder Dämpfen oder Wirk-, Aroma- und Duftstoffen erreicht wird. An die Folien wird der Kopf angespritzt. Solche aus mehreren aufeinanderliegenden Folien bestehende Behältergrundkörper sind aufwendig und kostspielig in der Herstellung.

Es ist auch bekannt (DE 1 486 175), den Mantel eines Behältnisses aus drei miteinander verbundenen Schichten herzustellen. Eine Zwischenschicht verhindert eine Sauerstoffabsorption aus der Atmosphäre und den Durchtritt ätherischen Öles nach außen durch die Wandung des Behältnisses. Die Zwischenschicht ist eine Metallfolie, die innenseitig durch eine Kunststoffschicht aus Mischpolymeren abgedeckt ist. Außenseitig wird die Metallfolie durch eine Schicht bedeckt, die beispielsweise aus Polyethylen besteht.

Es ist weiter ein Behälter mit einem Grundkörper bekannt (AT 1 972 262), der aus einem verhältnismäßig dickwandigen Kunststoffteil besteht.

Es ist ferner ein Behälter mit einem Grundkörper bekannt (DE 858 772), der aus einer Zinkhülse besteht, in der sich ein Einsatz aus biegsamem Polystyrol befindet.

Der Erfindung liegt die Aufgabe zugrunde, den gattungsgemäßen Behälter und das gattungsgemäße Verfahren so auszubilden, daß der Behälter einfach und kostengünstig hergestellt werden kann.

Diese Aufgabe wird beim gattungsgemäßen Behälter erfindungsgemäß mit den kennzeichnenden Merkmalen des Anspruches 1 und beim gattungsgemäßen Verfahren erfindungsgemäß mit den kennzeichnenden Merkmalen des Anspruches 16 gelöst.

Beim erfindungsgemäßen Behälter besteht der Grundkörper aus der Außenfolie, die beim Spritzgießen des Behälters an ihrer Innenseite vollständig mit Kunststoff hinterspritzt ist. Die Außenfolie bildet somit einen Überzug auf dem Kunststoff des Grundkörpers. Da sich die Folie über den gesamten Umfang und die gesamte Höhe des Grundkörpers erstreckt, dient die Folie nicht nur als Träger für den hinterspritzten Kunststoff, sondern bildet auch einen Bestandteil des Behältermantels.

Bei einer Ausbildung entsprechend Anspruch 3 wird der Grundkörper ausschließlich durch die Folie gebildet. Der Behälter läßt sich dadurch sehr einfach und kostensparend fertigen. An die Folie muß nur noch der Kopf angespritzt werden. Dadurch wird für die Herstellung des Behälters nur wenig Kunststoff benötigt.

Beim erfindungsgemäßen Verfahren wird die gewickelte Folie in das Spritzgußwerkzeug eingelegt und innenseitig vollständig mit dem Kunststoff hinterspritzt.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in Vorderansicht eine Spritzgußmaschine zur Herstellung eines erfindungsgemäßen Behälters,
- Fig. 2: die Spritzgußmaschine gemäß Fig. 1 in Seitenansicht,
- Fig. 3: eine Draufsicht auf die Spritzgußmaschine gemäß Fig. 1,
- Fig. 4: eine erste Ausführungsform eines erfindungsgemäßen Behälters,
- Fig. 5: in vergrößerter Darstellung die Einzelheit A in Fig. 4,
- Fig. 6: eine Draufsicht auf den erfindungsgemäßen Behälter gemäß Fig. 4,
- Fig. 7 bis Fig. 9: in Darstellungen entsprechend den Fig. 4 bis 6 eine zweite Ausführungsform eines erfindungsgemäßen Behälters,
- Fig. 10 bis Fig. 12: in Darstellungen entsprechend den Fig. 4 bis 6 eine dritte Ausführungsform eines erfindungsgemäßen Behälters,
- Fig. 13 bis Fig. 15: in Darstellungen entsprechend den Fig. 4 bis 6 eine vierte Ausführungsform eines erfindungsgemäßen Behälters,
- Fig. 16 bis Fig. 23: den Funktionsablauf bezüglich des Spritzgußwerkzeuges bei der Herstellung des erfindungsgemäßen Behälters.

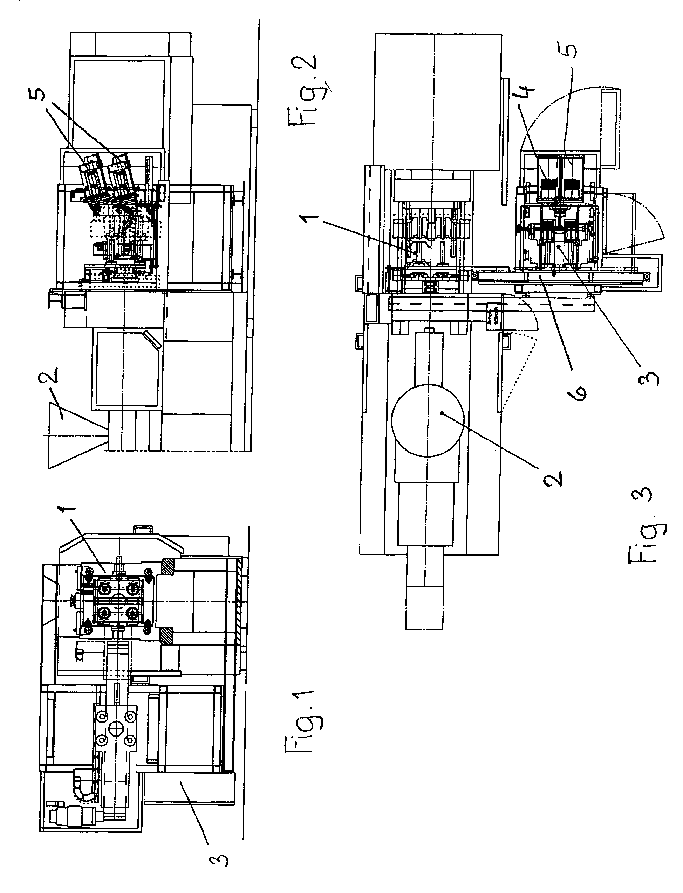

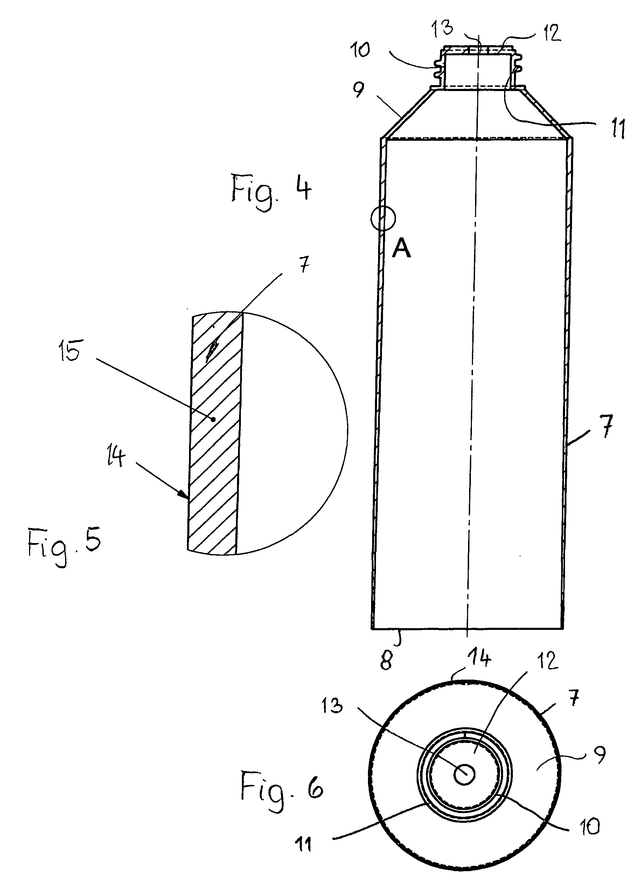

Mit der in den Fig. 1 bis 3 schematisch dargestellten Spritzgußmaschine werden Behälter hergestellt, wie sie beispielhaft in den Fig. 4 bis 15 dargestellt sind. Die Spritzgußmaschine ist an sich bekannt und wird darum auch nur kurz beschrieben. Sie hat ein Spritzgußwerkzeug 1, in dem die Behälter hergestellt werden. Der zur Herstellung des Behältnisses verwendete Kunststoff wird über einen Zuführtrichter 2 zugeführt. Im Bereich neben dem Spritzgußwerkzeug 1 befindet sich eine Zuführeinheit 3 für Folien 4, die zur Herstellung der Behälter verwendet werden. Die Folien 4 befinden sich in wenigstens einem Magazin 5 und sind Einzelfolien, die vorteilhaft bedruckt sind. Im Ausführungsbeispiel sind zwei übereinander angeordnete Magazine 5 für die Folien 4 vorgesehen. Die Magazine 5 sind in Zuführrichtung geneigt angeordnet, so daß die Folien 4 zuverlässig einer Transporteinrichtung 6 zugeführt werden können, mit der die Folien 4 zum Spritzgußwerkzeug 1 transportiert werden. Das Spritzgußwerkzeug 1 hat vorteilhaft mehrere Formaufnahmen, so daß in einem Vorgang mehrere Behälter gleichzeitig hergestellt werden können. Nach dem Spritzgußvorgang wird das Spritzgußwerkzeug 1 in noch zu beschreibender Weise geöffnet, so daß die gespritzten Behälter aus dem Spritzgußwerkzeug 1 entfernt werden können. Die gespritzten Behälter können beispielsweise nach Öffnen des Spritzgußwerkzeuges 1 nach unten in einen Behälter fallen. Es ist aber auch möglich, die gespritzten Behältnisse einer unterhalb des Spritzgußwerkzeuges 1 befindlichen Transporteinrichtung zuzuführen, mit der sie aus der Spritzgußmaschine gefördert werden. Die gespritzten Behälter werden zum Befüllen einer Abfüllmaschine zugeführt. Es ist hierbei möglich, daß die Behälter mit einer Entnahmeeinrichtung dem Spritzgußwerkzeug 1 entnommen und der Abfüllmaschine zugeführt werden. Das Spritzgußwerkzeug 1 kann auch Teil der Abfüllmaschine sein.

Besonders vorteilhaft ist, daß die Behälter nach der Entnahme aus dem Spritzgußwerkzeug 1 sofort befüllt werden können.

Die Fig. 4 bis 6 zeigen eine erste Ausführungsform eines Behälters. Er hat einen zylindrischen Grundkörper 7 mit einem offenen Ende 8. Der Grundkörper 7 ist an seinem dem Ende 8 gegenüberliegenden Ende mit einem konisch sich verjüngenden Mantelabschnitt 9 versehen, der in einen zylindrischen Hals 10 übergeht. Er ist außenseitig mit einem Gewinde 11 versehen, um einen (nicht dargestellten) Deckel auf den Hals 10 schrauben zu können. Der Hals 10 wird durch ein scheibenförmiges Verschlußstück 12 geschlossen, das eine zentrale Öffnung 13 aufweist.

Der Behälter ist einstückig aus spritzgußfähigem Kunststoff hergestellt. Er kann beispielsweise Polyethylen, Polypropylen oder Polystyrol sein. Im Ausführungsbeispiel ist der Behälter im Bereich seines Grundkörpers 7 außenseitig mit wenigstens einer Folie 14 versehen, die fest mit dem Grundmaterial 15 des Behälters verbunden ist. Die Folie 14 wird in das Spritzgußwerkzeug eingelegt und dann das Grundmaterial 15 in die Spritzgußform eingebracht. Auf diese Weise wird in einem Spritzgußvorgang die Folie 14 fest mit dem Grundmaterial 15 verbunden. Die Folie 14 ist aus einem Material hergestellt, das sich fest mit dem Grundmaterial 15 des Behälters verbindet. Vorteilhaft besteht die Folie 14 aus Polyethylen, Polypropylen und dergleichen. Die Folie 14 kann ein Etikett sein, das sich nur über einen Teil des Umfanges und/oder der Höhe des Grundkörpers 7 erstreckt. Im dargestellten Ausführungsbeispiel erstreckt sich die Folie 14 über den gesamten Umfang und die gesamte Höhe des Grundkörpers 7.

Der Mantelabschnitt 9, der Hals 10 mit dem Gewinde 11 und das Verschlußstück 12 sind einstückig mit dem Grundkörper 7 aus dem Grundmaterial 15 hergestellt. Die Wandstärke des Grundmaterials 15 ist um ein Mehrfaches größer als die Dicke der Folie 14.

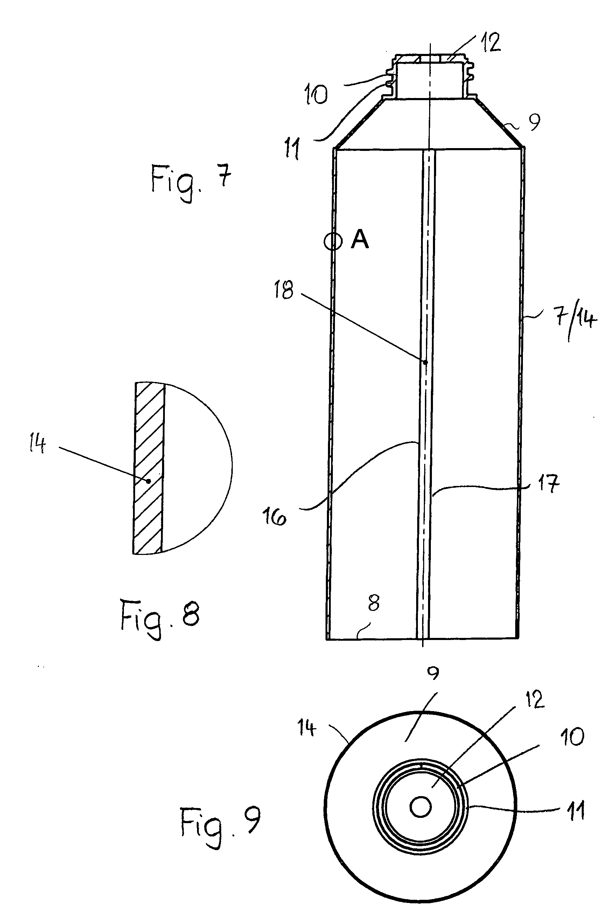

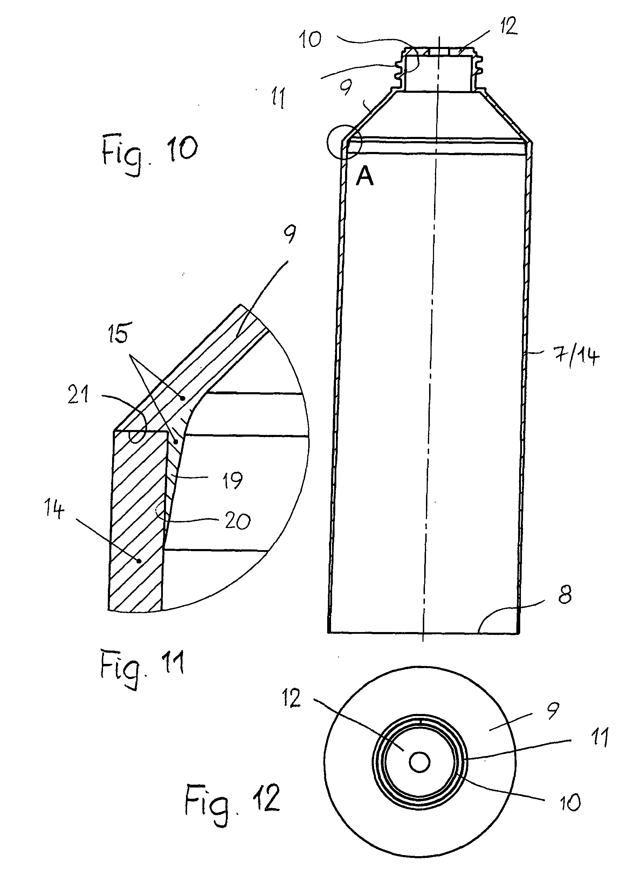

Die Fig. 7 bis 9 zeigen einen Behälter, bei dem lediglich der konische Mantelabschnitt 9, der Hals 10 mit dem Gewinde 11 und das scheibenförmige Verschlußstück 12 aus dem Grundmaterial 15 hergestellt sind. Der Grundkörper 7 wird hingegen vollständig durch die Folie 14 gebildet. Sie wird in das Spritzgußwerkzeug 1 eingelegt. Anschließend wird das Grundmaterial 15 über den Zuführtrichter 2 zur Herstellung des Mantelabschnittes 9, des Halses 10 mit dem Gewinde 11 und des Verschlußstückes 12 in das Werkzeug 1 eingespritzt. Die Folie 14 und der Mantelabschnitt 9 sind an ihren Stirnseiten fest und dicht miteinander verbunden. Am gegenüberliegenden Ende kann die Folie 14 nach dem Befüllen des Behälters zur Bildung eines Bodens an ihrem Ende 8 zusammengedrückt und verschweißt werden. Damit die beiden in Längsrichtung des Behälters verlaufenden Enden 16, 17 der Folie 14 dicht miteinander verbunden werden können, ist der Grundkörper 7 innenseitig mit einer stegförmigen Fließhilfe 18 versehen, die sich vom Ende 8 bis zum Übergang vom Grundkörper 7 in den konischen Mantelabschnitt 9 erstreckt. Diese Fließhilfe 18 besteht aus dem Grundmaterial 15 und wird beim Spritzgußvorgang erzeugt. Im Bereich dieser Fließhilfe 18 lassen sich die Längsenden 16, 17 der Folie 14 einwandfrei und dicht miteinander verbinden.

Da der Grundkörper 7 lediglich aus der Folie 14 besteht, ergibt sich ein sehr kostengünstig herzustellender Behälter. Die Folie 14 gewährleistet eine lange Haltbarkeit, da sie in bekannter Weise aus einem Material gefertigt sein kann, das eine hohe Zerreißfestigkeit hat. Aufgrund seiner geringen Wandstärke kann der leere Behälter sehr umweltfreundlich klein zusammengedrückt und entsorgt werden. Der leere Behälter nimmt dadurch nur wenig Volumen in Anspruch.

Bestehen das Grundmaterial 15 und die Folie 14 aus demselben Material, kann der Behälter ohne weiteres recycelt werden. Dies gilt sowohl für die vorige als auch für die nachfolgend beschriebenen Ausführungsbeispiele.

Der Behälter nach den Fig. 10 bis 12 ist ähnlich ausgebildet wie das vorige Ausführungsbeispiel. Der konische Mantelabschnitt 9, der Hals 10 mit dem Außengewinde 11 und das scheibenförmige Verschlußstück 12 bestehen aus dem Grundmaterial 15. Der Grundkörper 7 wird wiederum durch die Folie 14 gebildet, die am freien Ende 8 zur Bildung des Bodens zusammengedrückt und verschweißt sein kann, so daß entsprechend den vorhergehenden Ausführungsformen ein dünner, im wesentlichen gerade verlaufender Boden gebildet wird.

Im Unterschied zum vorigen Ausführungsbeispiel ist für die Folie 14 eine Fließhilfe nicht erforderlich. Statt dessen ist der Mantelabschnitt 9 innenseitig mit einem ringförmigen Vorsprung 19 versehen (Fig. 11), dessen Dicke in Richtung auf sein freies Ende stetig abnimmt. Der Vorsprung 19 hat eine zylindrische Außenseite 20, an der die Folie 14 mit ihrem oberen Randbereich innenseitig verschweißt ist. Die zylindrische Außenseite 20 des Vorsprunges 19 geht rechtwinklig in eine in einer Radialebene liegende ringförmige Schulterfläche 21 über, die die Stirnseite des Mantelabschnittes 9 bildet und deren radiale Breite der Dicke der Folie 14 entspricht. Dadurch liegt die Folie 14 stirnseitig über ihre radiale Dicke an der Schulterfläche 21 an, mit der sie verschweißt ist. Aufgrund der beschriebenen Ausbildung entsteht am Übergang von der Folie 14 in den Mantelabschnitt 9 außenseitig kein störender Absatz. Die Längsränder der Folie 14 können einander mit geringem Maß überlappen und durch Hitzeanwendung miteinander verschweißt sein. Die Längsränder können auch stoßend aneinander liegen. Der an der Innenseite der Folie 14 befindliche Vorsprung 19 ist ausreichend lang, damit die Folie 14 sicher mit dem Mantelabschnitt 9 verbunden werden kann. Auch bei dieser Ausführungsform wird zur Herstellung des Behältnisses nur wenig Material benötigt, da der Grundkörper 7 im wesentlichen nur durch die Folie 14 gebildet ist. Das Grundmaterial 15 wird darum im wesentlichen nur zur Herstellung des Mantelabschnittes 9, des Halses 10 mit dem Außengewinde 11 und des Verschlußstückes 12 benötigt.

Der Behälter gemäß den Fig. 13 bis 15 zeichnet sich dadurch aus, daß er mit einem Deckel 22 versehen ist, der über ein laschenartiges Scharnier 23 fest mit dem Grundkörper 7 verbunden ist. Der Deckel 22 wird bei der Herstellung des Behältnisses im Spritzgußwerkzeug 1 an ein Kopfstück 24 des Behälters angespritzt.

Das Kopfstück 24 ist beispielhaft zylindrisch ausgebildet und wird aus dem Grundmaterial 15 hergestellt. Das Kopfstück 24 hat ein Verschlußstück 25, das domförmig ausgebildet ist und an seiner höchsten Stelle die zentrale Öffnung 13 aufweist. Das Verschlußstück 25 ist einstückig mit dem Kopfstück 24 aus dem Grundmaterial 15 hergestellt.

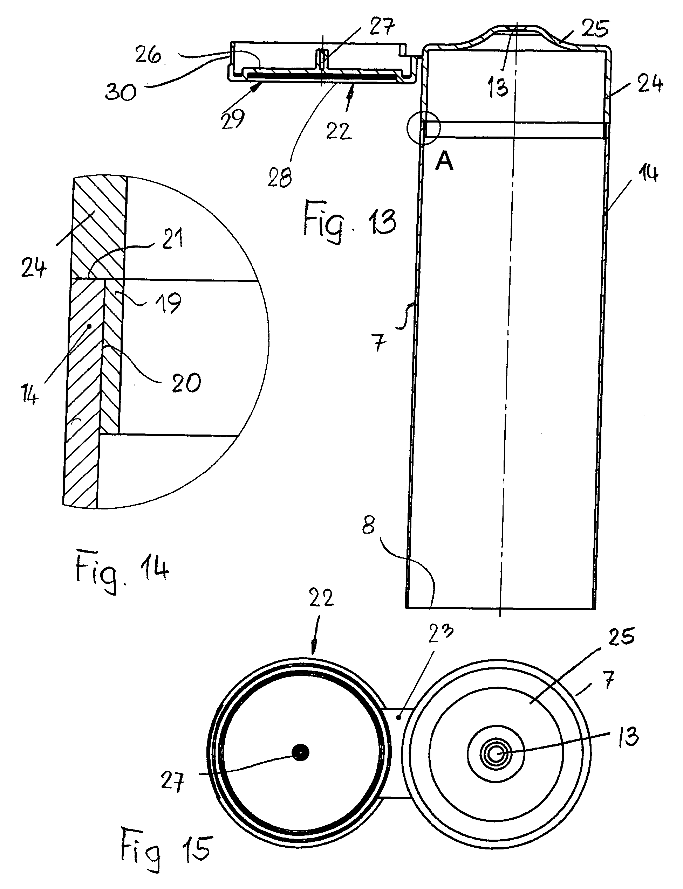

Wie Fig. 14 zeigt, hat das Kopfstück 24 den ringförmigen Vorsprung 19, der im Unterschied zur vorigen Ausführungsform über seine Länge konstante Dicke hat. Die Folie 14 ist innenseitig mit ihrem Randbereich an der Außenseite des Vorsprunges 19 befestigt, vorzugsweise mit ihm verschmolzen. Die an die Außenseite 20 des Vorsprunges 19 nach außen rechtwinklig anschließende Schulterfläche 21 hat eine radiale Breite, die der Dicke der Folie 14 entspricht. Dadurch wird am Übergang von der Folie 14 in das Kopfstück 24 kein störender Absatz gebildet. Die Folie 14 ist auch mit der Schulterfläche 21 des Kopfstückes 24 verschmolzen. Der Vorsprung 19 ist axial so lang, daß die Folie 14 ausreichend sicher mit ihm verbunden werden kann.

Die Folie 14 kann an ihrem freien Ende 8 zur Bildung des Bodens entsprechend den vorhergehenden Ausführungsformen zusammengedrückt und verschmolzen werden.

Der Deckel 22 hat eine vertiefte Oberseite 26, von der nach innen ein Verschlußdorn 27 absteht, der bei aufgesetztem Deckel 22 in die Öffnung 13 des Verschlußstückes 25 eingreift und somit den Behälter verschließt. In die Vertiefung 28 an der Außenseite des Deckels 22 ist eine weitere Folie 29 eingesetzt, die bei der Herstellung des Behälters im Spritzgußwerkzeug 1 mit dem Deckel 22 fest verbunden, vorzugsweise mit ihm verschmolzen wird und vorteilhaft bedruckt ist. Dementsprechend wird die flache, scheibenförmige Folie 29 in das offene Spritzgußwerkzeug 1 eingelegt und nach dem Schließen des Werkzeuges das Grundmaterial 15 eingespritzt, um den Dekkel 22 und das Kopfstück 24 herzustellen. In das geöffnete Werkzeug 1 wird selbstverständlich auch die Folie 14 in noch zu beschreibender Weise eingesetzt, so daß in einem Spritzgußvorgang der gesamte Behälter mit Deckel 22 hergestellt wird.

Der Deckel 22 ist haubenförmig ausgebildet, so daß er in aufgesetzter Lage das Kopfstück 24 mit seiner Ringwand 30 umgreift.

Der Deckel 22 und der restliche Teil des Behälters können aus unterschiedlichen Grundmaterialien hergestellt werden. Es ist dadurch beispielsweise möglich, den Deckel 22 in einem anderen Farbton zu halten als das Kopfstück 24.

Das Scharnier 23 gewährleistet eine sichere Anbindung des Deckels 22 an das Kopfstück 24.

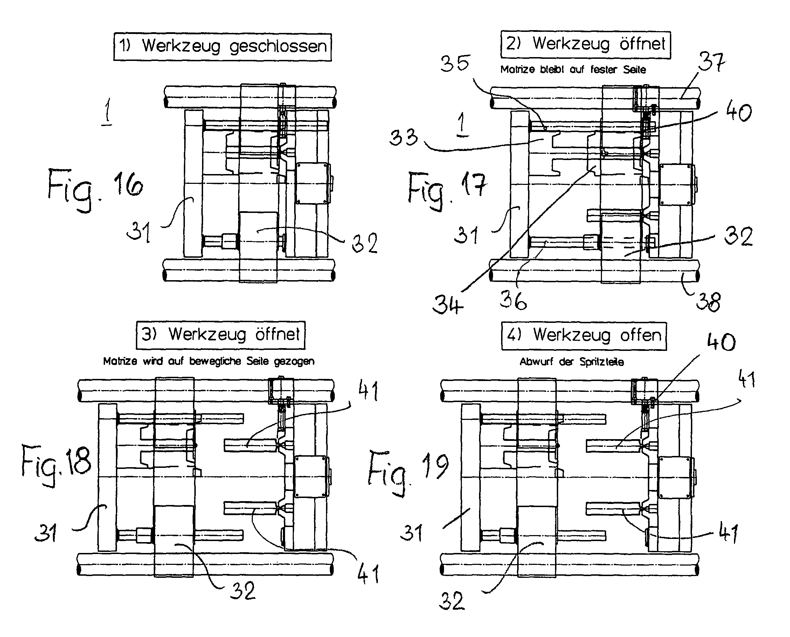

Anhand der Fig. 16 bis 23 wird der Ablauf beschrieben, wie der Behälter im Spritzgußwerkzeug 1 hergestellt wird. Es hat einen Kern 31 und eine Matrize 32. In der Darstellung gemäß Fig. 16 ist das Spritzgußwerkzeug geschlossen. In dieser Stellung erfolgt der Spritzvorgang, bei dem im Spritzgußwerkzeug wenigstens ein Behälter hergestellt wird.

Zum Öffnen des Spritzgußwerkzeuges 1 wird mit einer (nicht dargestellten) Steuerung die Kernluft aktiviert und der Kern 31 mit der beweglichen Maschinenseite in die Offenstellung gefahren (Fig. 17). Die Matrize 32 verbleibt noch in ihrer Ausgangslage. Der Kern 31 trägt innenseitig wenigstens einen Teil der Form 33, der mit einer entsprechenden Gegenform 34 der Matrize 32 beim Spritzgußvorgang zusammenwirkt. Der Kern 31 hat Führungen 35, 36, mit denen er in der Matrize 32 geführt ist. Die Matrize ihrerseits ist längs Führungen 37, 38 verfahrbar. Während der Kern 31 in seine Offenstellung verfahren wird, wird die Matrize 32 von wenigstens einem hydraulischen Auswerfer gegen einen Schieber 40 gedrückt.

Sobald der Kern 31 einen bestimmten Öffnungshub ausgeführt hat, wird der Auswerfer umgesteuert, so daß er die Matrize 32 in Richtung auf den Kern 31 zurückzieht (Fig. 18). Sobald die Matrize 32 ihre Endlage erreicht hat, ist das Spritzgußwerkzeug offen. Der Schieber 40 wird geöffnet und die gespritzten Behälter 41 abgeworfen. Nach einer Pausenzeit wird der Schieber 40 geschlossen, so daß das Spritzgußwerkzeug 1 für den nächsten Spritzgußvorgang bereit ist. Die Endlage des Schiebers 40 wird vorteilhaft durch wenigstens einen Näherungsschalter überwacht.

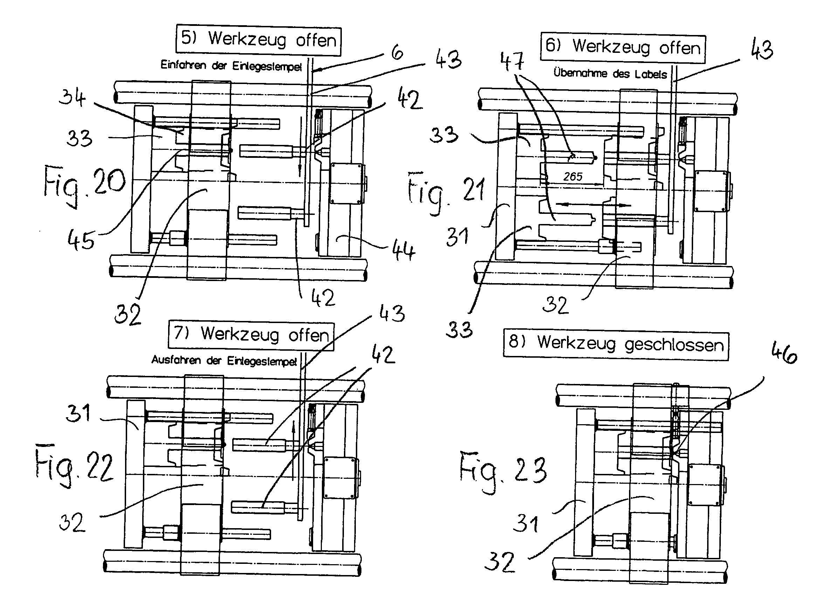

Nach Ablauf der Pausenzeit erhält die Transporteinrichtung 6 ein Schaltsignal, damit sie aus der Zuführeinheit 3 in das offene Spritzgußwerkzeug einfährt (Fig. 20). Die Transporteinrichtung 6 ist als Linearachse ausgebildet und hat wenigstens einen, im Ausführungsbeispiele mehrere Dorne 42, die quer von einem Träger 43 abstehen. Die Dorne 42 haben (nicht dargestellte) Öffnungen, die vorteilhaft über den Umfang verteilt angeordnet sind und die in Verbindung mit einer Unterdruckquelle stehen. Bevor der Träger 43 mit den Dornen 42 in das offene Werkzeug 1 gefahren wird, werden in der Zuführeinheit 3 die Folien 14 auf die Dorne gewickelt. Hierzu werden die Folien 14 durch Unterdruck selbsttätig auf die Dorne 42 gewickelt. Sie befinden sich in der Zuführeinheit 3 ober- oder unterhalb der Folien 14. Über die Öffnungen der Dorne 42 wirkt der Unterdruck auf die Folien, die dadurch selbsttätig auf die Dorne gewickelt werden. Damit die Folien 14 gleichmäßig auf die Dorne 42 aufgewickelt werden, sind die Ansaugöffnungen der Dorne 42 zwei Saugsystemen zugeordnet, die nacheinander betätigt werden. Zunächst wird das eine Saugsystem eingeschaltet, so daß nur über einen Teil der Ansaugöffnungen der Unterdruck auf die Folie wirkt. Sie wird dementsprechend in diesem Bereich gegen den Dorn 42 gezogen. Anschließend wird auch das zweite Saugsystem eingeschaltet, so daß über den restlichen Teil der Ansaugöffnungen der restliche Teil der Folie 14 auf den Dorn 42 gewickelt wird.

Die Folien 14 können ausschließlich innerhalb der Zuführeinheit 3 in der beschriebenen Weise auf die Dorne 42 durch Anwendung von Unterdruck gewickelt werden. Es ist aber auch möglich, daß in der Zuführeinheit 3 der Aufwickelvorgang beginnt und während des Transportes von der Zuführeinheit 3 zum Spritzgußwerkzeug 1 die Folien 14 dann vollständig auf die Dorne 42 gewickelt werden. Sobald die Dorne 42 innerhalb des Spritzgußwerkzeuges 1 die Einlegeposition erreicht haben, wird der Antrieb der Transporteinrichtung 6 abgeschaltet. Die Einlegeposition wird vorteilhaft durch Näherungsschalter überwacht, die ein entsprechendes Abschaltsignal erzeugen, sobald die Dorne 42 die Einlegeposition erreicht haben. Wie Fig. 20 zeigt, befinden sich die Dorne 42 mit den aufgewickelten Folien im Bereich zwischen der Matrize 32 und dem ortsfesten Werkzeugteil 44. In der Einlegeposition liegen die Dorne 42 mit den aufgewickelten Folien 14 fluchtend zu Öffnungen 45 in den Formteilen 34 der Matrize 32. Die Matrize 32 kann nunmehr in Richtung auf die Dorne 42 verschoben werden, wobei die Dorne 42 mit den auf ihnen befindlichen Folien in die axialen Öffnungen 45 der Formteile 34 der Matrize 32 eingreifen (Fig. 21). Der Kern 31 bleibt noch in seiner Öffnungsposition. Sobald die Matrize 32 in ihre Übergabeposition gemäß Fig. 21 gefahren ist, wird sie angehalten und Unterdruck an die Matrize 32 angelegt. In der Wandung der Öffnungen 45 sind entsprechende Saugöffnungen vorgesehen, über die der Unterdruck auf die auf den Dornen 41 aufgewickelten Folien 14 wirkt. Gleichzeitig wird der Unterdruck in der Transporteinrichtung 6 abgeschaltet, so daß die Matrize 32 wieder in Richtung auf ihre Öffnungsstellung zurückfahren kann (Fig. 22). Da der Unterdruck in der Matrize 32 aufrechterhalten bleibt, bleiben die aufgewickelten Folien 14 an der Innenwand der Öffnungen 45 hängen und werden von den Dornen 42 abgezogen. Sobald die Matrize 32 zurückgefahren ist, wird der Träger 43 mit den Dornen 42 aus dem Spritzgußwerkzeug 1 zurück in die Zuführeinheit 3 gefahren. Anschließend werden der Kern 31 und die Matrize 32 zurückgefahren und damit das Spritzgußwerkzeug 1 geschlossen (Fig. 23). Nunmehr wird das Grundmaterial 15 in das Spritzgußwerkzeug über Spritzdüsen 46 eingespritzt. Das Grundmaterial 15 wird mit der Folie 14 verbunden, wodurch der Behälter gemäß einer der Fig. 4 bis 15 hergestellt wird, je nach Ausbildung des Spritzgußwerkzeuges. Während des Spritzvorganges können in der Zuführeinheit 3 auf die Dorne 42 des Trägers 43 die nächsten Folien in der beschriebenen Weise aufgewickelt werden.

Die auf die Dorne 42 gewickelten Folien 14 können auch statisch aufgeladen werden. Gelangen sie in die Öffnungen 45 der matrizenseitigen Formteile 34, bleiben die statisch aufgeladenen Folien 14 an der Wandung der Öffnungen 45 hängen. Nach Abschalten des Unterdruckes in der Transporteinheit 6 wird die Matrize 32 in der beschriebenen Weise mit den Folien 14 in die Öffnungsstellung zurückgefahren (Fig. 22), damit der Träger 43 mit den Dornen 42 zurückgezogen werden kann. In der Matrize 32 ist dann die Anwendung von Unterdruck nicht notwendig.

Im beschriebenen Ausführungsbeispiel wird die Matrize 32 verschoben, um die Folien 14 von den Dornen 42 des Trägers 43 aufzunehmen. Es ist auch möglich, den Träger 43 in Richtung auf die in Offenstellung befindliche Matrize 32 zu verfahren, damit die Dorne 42 mit den aufgewickelten Folien 14 in die Öffnungen 45 der Formteile 34 gelangen. Auch ist es möglich, die Matrize 32 und den Träger 43 gleichzeitig in Richtung zueinander zu verfahren, um die aufgewickelten Folien 14 der Matrize zu übergeben.

Die Formteile 33 des Kerns 31 haben zur Herstellung der Behälter einen Dorn 47 (Fig. 21), der bei geschlossenem Werkzeug 1 in die Öffnung 45 der Formteile 34 der Matrize 32 sowie in die darin befindliche aufgewickelte Folie 14 eintaucht.

Wenn die Folie 14 den Grundkörper 7 des Behälters bildet oder über den gesamten Umfang des Grundkörpers vorgesehen ist, kann sie auch von einer Rolle abgeschnitten werden, so daß ein Folienabfall vermieden wird. Besteht der Grundkörper 7 nur aus der Folie 14 (Fig. 7 bis 15), dann kann der Behälter sehr lang sein, da das Grundmaterial 15 nur noch für den Kopf des Behälters benötigt wird. Für ihn sind keine langen Fließwege des Grundmaterials erforderlich. Für den Spritzguß sind darum auch keine hohen Kräfte notwendig.

Da bei der beschriebenen bevorzugten Ausbildung des Spritzgußwerkzeuges 1 die Matrize 32 zur Übernahme der aufgewickelten Folien in Richtung auf den Träger 43 verfahren wird, können die Dorne 42 mit dem Träger 43 ortsfest stehen bleiben, wodurch sich eine hohe Positioniergenauigkeit ergibt, die sich vorteilhaft auf die Spritzqualität auswirkt.

Die Folien 14 können in der beschriebenen Weise aus Einzelfolien bestehen, die in den Magazinen 5 liegen, oder von einer Rolle in der notwendigen Größe abgeschnitten werden.

Es ist ferner möglich, die Folien 14 schlauchförmig auszubilden. Dann ist ein Aufwickeln auf die Dorne 42 nicht notwendig. Die schlauchförmigen Folien 14 können in der erforderlichen Länge zugeschnitten sein. Es kann aber auch ein Endlosschlauch verwendet werden, von dem in gewünschter Länge die Schlauchfolien abgetrennt werden.

## Patentansprüche

1. Behälter aus Kunststoff (15), mit einem Kopf (9 bis 12; 24, 25) und einem Grundkörper (7), der eine Außenfolie (14) aufweist,
**dadurch gekennzeichnet, daß** die Außenfolie (14) beim Spritzgießen des Behälters (41) an ihrer Innenseite vollständig mit dem Kunststoff (15) hinterspritzt ist.

2. Behälter nach Anspruch 1,
**dadurch gekennzeichnet, daß** der hinterspritzte Kunststoff (15) und der Kopf (9 bis 12; 24, 25) aus demselben Material bestehen.

3. Behälter aus Kunststoff (15), mit einem Kopf (9 bis 12; 24, 25) und einem Grundkörper (7), der eine Folie (14) aufweist,
**dadurch gekennzeichnet, daß** der Grundkörper (7) ausschließlich durch die Folie (14) gebildet ist.

4. Behälter nach Anspruch 3,
**dadurch gekennzeichnet, daß** der Kopf (9 bis 12; 24, 25) an die Folie (14) angespritzt ist.

5. Behälter nach Anspruch 3 oder 4,
**dadurch gekennzeichnet, daß** die Folie (14) mit ihren Längsrändern (16, 17) an einer Fließhilfe (18) befestigt ist, die vorteilhaft ein über die Länge der Folie (14) sich erstreckender Steg ist.

6. Behälter nach Anspruch 5,
**dadurch gekennzeichnet, daß** die Fließhilfe (18) aus demselben Kunststoff wie der Kopf (9 bis 12) besteht.

7. Behälter nach einem der Ansprüche 1 bis 5,
**dadurch gekennzeichnet, daß** die Längsränder (16, 17) der Folie (14) einander überlappend miteinander verbunden und vorteilhaft miteinander verschweißt sind.

8. Behälter nach einem der Ansprüche 3 bis 7,
**dadurch gekennzeichnet, daß** der Kopf (9 bis 12; 24, 25) einen umlaufenden Vorsprung (19) aufweist, auf dem die Folie (14) mit einem Endbereich befestigt ist und vorteilhaft mit ihrer Innenseite am umlaufenden Vorsprung (19) anliegt.

9. Behälter nach Anspruch 8,
**dadurch gekennzeichnet, daß** die Dicke des Vorsprunges (19) in Richtung auf sein freies Ende abnimmt, vorzugsweise stetig.

10. Behälter nach Anspruch 8,
**dadurch gekennzeichnet, daß** der Vorsprung (19) über seine Länge konstante Dicke hat.

11. Behälter nach einem der Ansprüche 1 bis 10,
**dadurch gekennzeichnet, daß** der Kopf (9 bis 12; 24, 25) mit einem Verschlußdeckel (22) versehen ist, der vorteilhaft über ein Scharnier (23) mit dem Kopf (9 bis 12; 24, 25) verbunden ist.

12. Behälter nach Anspruch 11,
**dadurch gekennzeichnet, daß** der Verschlußdeckel (22) und der Kopf (9 bis 12; 24, 25) aus demselben Kunststoff bestehen.

13. Behälter nach Anspruch 11,
**dadurch gekennzeichnet, daß** der Verschlußdeckel (22) und der Kopf (9 bis 12; 24, 25) aus unterschiedlichem Kunststoff bestehen.

14. Behälter nach einem der Ansprüche 11 bis 13,
**dadurch gekennzeichnet, daß** der Verschlußdeckel (22) mit mindestens einem vorteilhaft in einer Vertiefung (28) des Verschlußdeckels (22) liegenden Etikett (29) versehen ist.

15. Behälter nach Anspruch 14,
**dadurch gekennzeichnet, daß** das Etikett (29) mit dem Verschlußdekkel (22) durch Spritzgießen zumindest des Verschlußdeckels (22) verbunden ist.

16. Verfahren zur Herstellung eines Behälters nach einem der Ansprüche 1, 2 und 11 bis 15 durch Spritzgießen, bei dem eine gewickelte Folie (14) in ein Spritzgußwerkzeug (1) eingelegt und ein Kunststoff (15) in das Spritzgußwerkzeug (1) eingebracht wird,
**dadurch gekennzeichnet, daß** die gewickelte Außenfolie (14) an ihrer Innenseite vollständig mit dem Kunststoff (15) hinterspritzt wird.

17. Verfahren nach Anspruch 16,
**dadurch gekennzeichnet, daß** die Folie (14) vorteilhaft selbsttätig auf einen Dorn (42) einer Einlegeeinheit (6) gewickelt wird, mit der die gewickelte Folie (14) in das Spritzgußwerkzeug (1) eingesetzt wird.

18. Verfahren nach Anspruch 17,
**dadurch gekennzeichnet, daß** der Dorn (42) an eine Unterdruckquelle angeschlossen wird, und daß vorteilhaft der Unterdruck über Ansaugöffnungen des Dorns (42) auf die Folie (14) wirkt.

19. Verfahren nach Anspruch 18,
**dadurch gekennzeichnet, daß** die Zuführung des Unterdruckes zum Wickeln der Folie (14) auf den Dorn (42) umgeschaltet wird.

20. Verfahren nach Anspruch 16 oder 18,
**dadurch gekennzeichnet, daß** als Folie (14) ein vorgefertigter Schlauch verwendet wird.

21. Verfahren nach einem der Ansprüche 17 bis 20,
**dadurch gekennzeichnet, daß** die Einlegeeinheit (6) von einer Zuführeinheit (3) für die Folie (14) zum Spritzgußwerkzeug (1) bewegt wird.

22. Verfahren nach einem der Ansprüche 16 bis 21,
**dadurch gekennzeichnet, daß** zum Öffnen des Spritzgußwerkzeuges (1) ein Kern (31) und eine Matrize (32) verfahren und ein den gespritzten Behälter (41) enthaltender Werkzeugteil (44) ortsfest gehalten werden, und daß vorteilhaft zur Übernahme der gewickelten Folie (14) vom Dorn (42) die Matrize (32) zur Einlegeeinheit (6) verfahren wird.

23. Verfahren nach Anspruch 22,
**dadurch gekennzeichnet, daß** die aufgewickelte Folie (14) mittels Unterdruck von der Matrize (32) übernommen und der Unterdruck in der Einlegeeinheit (6) abgeschaltet wird.

24. Verfahren nach Anspruch 22,
**dadurch gekennzeichnet, daß** die Folie (14) statisch aufgeladen wird, daß die Matrize (32) die statisch aufgeladene Folie (14) übernimmt und daß der Unterdruck in der Einlegeeinheit (6) abgeschaltet wird.
